# FASCICULE DE BREVET EUROPEEN

(11) **EP 1 990 260 B1**
(45) Date de publication et mention de la délivrance du brevet: **21.04.2010**
(21) Numéro de dépôt: 08155735.7
(22) Date de dépôt: 06.05.2008
(51) Int. Cl.: B62D 25/06, B62D 25/08, B62D 25/16, B60Q 1/00

(54) **Aile de véhicule automobile avec butées pour bloc optique**
Kotflügel eines Kraftfahrzeuges mit Beleuchtungsanschlägen.
Vehicle wing with optical unit's stops.

(30) Priorité: 09.05.2007 FR 0754940
(43) Date de publication de la demande: 12.11.2008
(73) Titulaire: COMPAGNIE PLASTIC OMNIUM, 69007 Lyon (FR)
(72) Inventeur: Troton, Jean, D-81375 München (DE)
(74) Mandataire: Potdevin, Emmanuel Eric

(56) Documents cités:
- EP-A1- 1 352 811
- FR-A1- 2 820 706
- FR-A1- 2 827 251

## Description

La présente invention concerne le domaine des blocs avant de véhicule automobile, notamment le domaine des jeux et affleurements entre le bloc optique et les pièces de carrosserie du bloc avant du véhicule automobile.

On entend par « bloc optique », l'ensemble d'un boîtier et d'un vitrage d'optique, destiné à se trouver en affleurement avec l'aile.

On connaît, dans l'état de la technique, notamment du document FR 2 820 706, un bloc avant de véhicule automobile comprenant une aile et un bloc optique.

Le vitrage d'optique comprend deux doigts rigides de positionnement, réalisés d'un seul tenant avec le vitrage d'optique et destinés chacun à s'engager dans un orifice de l'aile.

Les dimensions des doigts sont déterminées pour prendre en compte les tolérances de fabrication du bloc optique. Chaque orifice de l'aile est ainsi dimensionné pour que le doigt de positionnement correspondant puisse y prendre plusieurs positions.

De ce fait, ces doigts rigides n'assurent qu'un positionnement relativement grossier du bloc optique relativement à l'aile, son positionnement précis devant être effectué manuellement par un opérateur, après le montage du bloc optique sur l'aile.

Ainsi, dans l'état de la technique, malgré la présence de moyens de positionnement, le positionnement du bloc optique vis-à-vis de l'aile reste une opération relativement longue et complexe, nécessitant des opérations manuelles délicates.

La présente invention a pour but de fournir un bloc avant de véhicule automobile facilitant le positionnement du bloc optique relativement à l'aile.

A cet effet, l'invention a pour objet une aile de véhicule automobile en matière plastique caractérisée en ce qu'elle comprend un orifice en regard duquel un bloc optique est destiné à être placé, et, à la périphérie de cet orifice, des moyens élastiques formant butée contre lesquels le bloc optique est destiné à s'appuyer, lesdits moyens élastiques étant agencés de sorte que le bloc optique est apte à être placé dans différentes positions en regard de l'orifice en prenant appui contre les moyens élastiques.

On entend par « orifice de l'aile», soit une ouverture de l'aile présentant un contour fermé et destinée à accueillir le bloc optique soit un ajour de l'aile formant une ouverture à contour ouvert (c'est-à-dire non fermé) destinée à accueillir le bloc optique lorsqu'elle est disposée en combinaison avec les pièces de carrosserie environnantes telles que la peau de pare-chocs ou la calandre.

Ainsi, du fait de la présence des moyens élastiques, on peut positionner le vitrage d'optique relativement à l'aile du véhicule automobile et optimiser les jeux et/ou les affleurements en réglant simplement la ou les forces d'appui du vitrage d'optique contre l'aile. Il suffit de déplacer en un ou plusieurs endroits le bloc optique de façon à déformer les butées et de fixer celui-ci lorsqu'il a atteint une position satisfaisante par rapport à l'aile. Même dans le cas d'un vitrage d'optique présentant des imperfections, il est possible de le positionner de façon précise.

L'opération de réglage du positionnement du bloc optique est simplifiée. En effet, comme il prend appui contre les moyens élastiques, le bloc optique est maintenu dans une position stable à tout instant de son déplacement entre deux positions contre les moyens élastiques.

Du fait de la position stable à tout instant du bloc optique vis-à-vis de l'aile, le réglage de la position du bloc optique pour optimiser les jeux et/ou les affleurements est précis et peut être relativement rapide, ce qui est susceptible d'engendrer une économie des coûts de fabrication.

Dans un mode de réalisation particulièrement avantageux, les moyens élastiques formant butées comprennent une pluralité d'éléments élastiquement déformables indépendamment les uns des autres, chaque élément exerçant une force de rappel élastique élémentaire sur le bloc optique positionné en regard de l'orifice, lesdits éléments étant répartis à la périphérie de l'orifice et présents en un nombre suffisant pour que la somme des forces de rappel élastique élémentaires exercées sur le bloc optique soit sensiblement constante, même pour différents blocs optiques présentant entre eux des variations dimensionnelles dues à leurs tolérances de fabrication.

Dans ce mode de réalisation, la « pluralité » d'éléments et la somme de forces « sensiblement constante » sont des notions ne pouvant être définies que par le but poursuivi, compte tenu de la grande diversité de situations pouvant être rencontrées par l'homme du métier en matière de blocs optiques et d'ailes.

Le terme « sensiblement constant » doit toutefois être considéré comme signifiant que la variation de la somme des forces de rappel est bien inférieure à la valeur de cette somme, de préférence inférieure à 20%. En fonction de la circonstance et de la précision de réglage recherchée, l'homme du métier saura, sans difficulté, déterminer la bonne quantité d'éléments à retenir et leur répartition ainsi que la plage de valeurs de la somme de forces élémentaires à l'intérieur de laquelle ladite somme devra être considérée comme sensiblement constante.

En général, on pourra constater que le nombre d'éléments doit être tel que ces derniers couvrent une portion supérieure à 30% du pourtour de l'orifice mais cette valeur dépend du niveau de précision désiré et ne peut être considérée comme limitative.

Le but, précédemment mentionné, de ce mode de réalisation est que les imperfections du bloc optique soient prises en compte par les différents éléments, si bien que, si le bloc optique présente en un endroit donné une bosse, l'élément correspondant est, pour une position du bloc optique donnée, plus contrainte qu'un élément placé en regard d'un endroit du bloc optique présentant un creux. Chaque élément exerce ainsi une force de rappel (ou force de réaction) élémentaire sur le bloc optique, plus ou moins importante en fonction de la façon dont il est déformé. La répartition des éléments étant régulière et leur nombre étant bien choisi, la résultante des forces de rappel de l'aile sur le bloc optique pour arriver à un bon positionnement du bloc optique est sensiblement constante. Ce mode de réalisation permet donc d'obtenir un positionnement très satisfaisant du bloc optique vis-à-vis de l'aile en appliquant sur le bloc optique une force de serrage prédéterminée (par exemple en appliquant un couple de serrage prédéterminé sur des vis), ce qui permet de positionner avec précision et rapidité le bloc optique sur le véhicule.

En outre, ce mode de réalisation permet de mieux répartir les contraintes exercées par le bloc optique sur l'aile et d'assurer de ce fait une meilleure tenue de l'aile dans le temps.

L'aile de véhicule automobile selon l'invention peut également comprendre l'une ou plusieurs des caractéristiques de la liste ci-dessous :
- les moyens élastiques comportent au moins une languette élastique solidaire de l'aile. Cette languette peut alors être moulée directement avec l'aile. La fabrication du véhicule ne nécessite donc pas d'étape supplémentaire de mise en place de ces moyens sur l'aile,
- l'aile comprend, en périphérie de l'orifice, des moyens de fixation d'un cache coiffant le bord de l'orifice et les moyens élastiques,
- les moyens de fixation du cache comprennent des moyens de clippage élastique du cache,
- les moyens de fixation du cache sont formés dans au moins une languette élastique solidaire de l'aile, éventuellement issue de moulage avec l'aile. Un tel cache permet d'améliorer l'esthétique du bloc avant du véhicule automobile en cachant notamment les moyens élastiques susceptibles de dégrader l'aspect du véhicule. En outre, on sait que le vitrage d'optique comporte un revêtement permettant de le protéger du jaunissement provoqué par une exposition directe aux U.V. Ce revêtement, qui subit un frottement du fait de l'appui du vitrage contre les moyens élastiques, peut être endommagé. Par conséquent, le vitrage d'optique peut être dégradé et jaunir à l'endroit où le revêtement a été endommagé, ce jaunissement étant susceptible de se propager dans le vitrage. Le cache permet aussi d'éviter une dégradation d'aspect du vitrage due à la propagation d'U.V. dans le vitrage à partir de la périphérie de celui-ci, où il est particulièrement sollicité mécaniquement,
- l'aile comprend, à la périphérie de l'orifice, un bord tombé,
- la languette élastique est conformée dans le bord tombé,
- le bord tombé comprend une première bande de matière d'un seul tenant et une deuxième bande de matière ajourée pour former la languette. Ainsi, le bord tombé possède une certaine inertie car il est relié solidement à l'aile par la première bande de matière. Les efforts dus aux déformations de la ou des languettes sont donc supportés par cette première bande de matière à forte inertie, ce qui évite la déformation de l'aile à la périphérie de l'orifice. Le bord tombé peut en outre soutenir une partie du poids du bloc optique, ce qui permet de mieux répartir le poids de celui-ci sur les différents éléments du bloc avant pour optimiser sa fixation,
- les moyens élastiques sont agencés à la périphérie de l'orifice pour venir en butée contre une face du bloc optique orientée selon une direction sensiblement parallèle à la direction longitudinale du véhicule lorsque le bloc optique est monté sur le véhicule. Ils permettent alors d'assurer les affleurements du bloc optique et de l'aile, c'est à dire de le positionner correctement selon la direction longitudinale du véhicule,
- les moyens élastiques sont agencés à la périphérie de l'orifice pour venir en butée contre une face du bloc optique orientée selon une direction sensiblement parallèle à la direction longitudinale du véhicule lorsque le bloc optique est monté sur le véhicule. Ils permettent alors d'assurer le centrage du bloc optique dans l'orifice, c'est-à-dire de le positionner correctement selon les directions transversales et verticales du véhicule.

L'invention a également pour objet un ensemble d'un support d'optique et d'une aile de véhicule automobile en matière plastique selon l'invention, caractérisé en ce que le support d'optique comprend des moyens de déplacement destinés à coopérer avec le bloc optique et aptes à déplacer le bloc optique dans différentes positions d'appui contre les moyens élastiques formant butées.

Dans un mode de réalisation avantageux, les moyens de déplacement comprennent des moyens de fixation du bloc optique sur le support d'optique. Ainsi, lors du montage du véhicule, le positionnement du bloc optique vis-à-vis de l'aile est effectué en même temps que la fixation du bloc optique, ce qui permet de simplifier le montage de celui-ci.

L'invention sera mieux comprise à la lecture de la description qui va suivre, donnée uniquement à titre d'exemple et faite en se référant aux dessins dans lesquels :
- la figure 1 est une première vue en coupe de l'ensemble selon un mode de réalisation de l'invention, lorsqu'il est monté sur un véhicule automobile,
- la figure 2 est une deuxième vue en coupe de l'ensemble de la figure 1, lorsqu'il est monté sur un véhicule automobile,

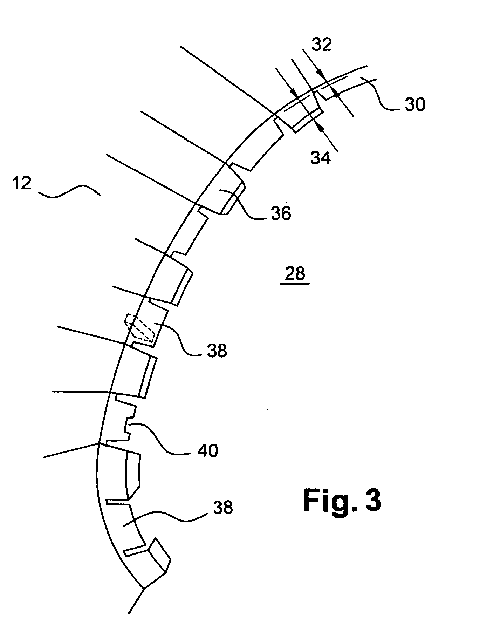

- la figure 3 est une vue en perspective d'une partie d'une aile appartenant à l'ensemble de la figure 1 au voisinage de son orifice.

On a représenté sur les figures un ensemble 10 d'une aile 12 de véhicule automobile, d'un bloc optique 14 et d'un support d'optique 16 destiné à supporter le bloc optique 14.

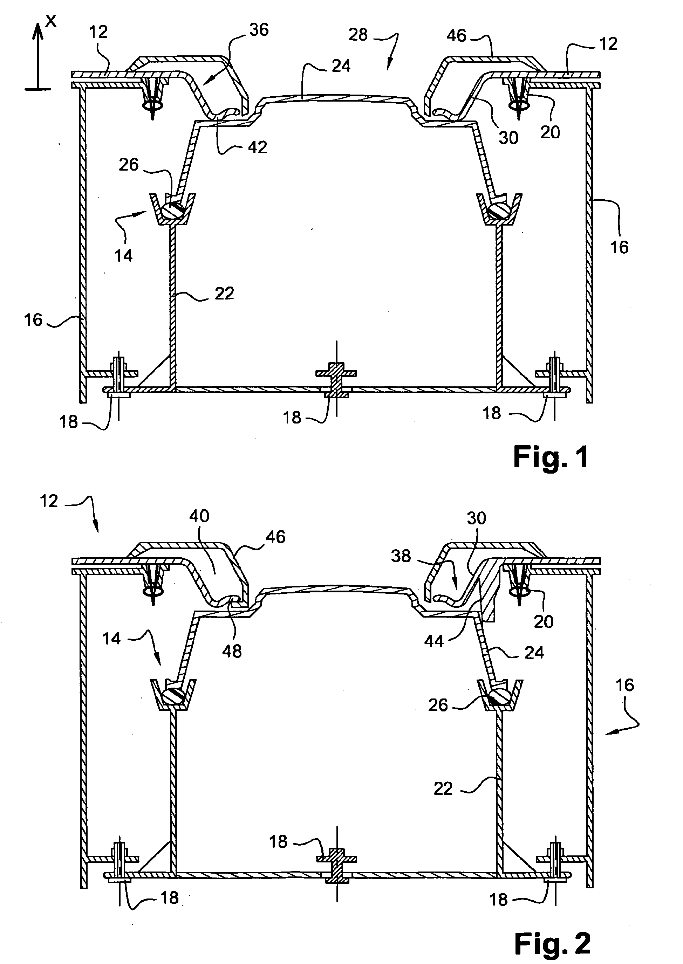

Le support d'optique 16 représenté à la figure 1 est d'un seul tenant et est fixé à la structure du véhicule automobile (non représentée sur les figures). II comprend des moyens de déplacement du bloc optique 14, comprenant des moyens de fixation du bloc optique, destiné à relier le support d'optique 16 à l'arrière du bloc optique 14 et permettant de supporter celui-ci. Ces moyens comprennent notamment des orifices taraudés dans lesquels sont destinés à être insérées des vis de fixation 18. Il comprend également des moyens de fixation 20 à l'aile 12 du véhicule automobile, ainsi que d'autres éléments fonctionnels du véhicule, non représentés sur les figures. Le support d'optique 16 est réalisé en matériau thermoplastique, notamment en polypropylène (PP) ou polyamide (PA), éventuellement renforcé de fibres.

Le bloc optique 14 comprend un boîtier d'optique 22 métallique, destiné à contenir les feux et/ou autres éléments fonctionnels pour la vision, et un vitrage d'optique 24 transparent, réalisé par exemple en polycarbonate (PC) et destiné à être visible de l'extérieur du véhicule automobile. Le boîtier 22 et le vitrage d'optique 24 sont reliés par l'intermédiaire d'un joint 26 qui peut entraîner des irrégularités jusqu'à 1.5 mm dans la position du vitrage d'optique 24 relativement au boîtier d'optique 22. Le vitrage d'optique 24 est recouvert d'un revêtement de protection du vitrage contre les U.V. comprenant notamment du polytetrafluoroethylène (PTFE).

L'aile 12 comprend un orifice 28 en regard duquel le bloc optique 14 est destiné à être placé. En périphérie de cet orifice, l'aile comprend un bord tombé 30 comportant une première bande de matière 32 d'un seul tenant et une deuxième bande de matière 34 ajourée pour former une pluralité de languettes 36, 38, 40 issues de moulage avec l'aile 12.

Les languettes 36, 38 sont élastiquement déformables indépendamment les unes des autres. Ces languettes sont réparties sur le pourtour de l'orifice.

Ces languettes 36, 38 sont des moyens élastiques formant butée contre lesquels le bloc optique 14 est destiné à s'appuyer. Elles sont agencées de sorte que le bloc optique 14 est apte à être placé dans différentes positions en regard de l'orifice 28, en prenant appui contre ces languettes 36, 38. Elles permettent de régler les jeux et affleurement entre le bloc optique 14 et l'aile 12, notamment pour tenir compte des irrégularités du bloc optique 14 au niveau de la liaison entre le boîtier d'optique 22 et le vitrage d'optique 24.

Plus particulièrement, l'aile comprend deux types de languettes permettant d'effectuer des réglages de positionnement.

Une languette 36 d'un premier type, visible sur la figure 1, est agencée pour venir en butée contre une face du vitrage d'optique 24 destinée à être orientée selon une direction sensiblement parallèle à la direction longitudinale du véhicule lorsque le vitrage est correctement positionné dans l'orifice. Ces languettes sont agencées autour de l'orifice pour couvrir au moins 30% du pourtour de celui-ci. Les languettes 36 sont destinées à régler l'affleurement du bloc optique 14 relativement à l'aile 12.

Chaque languette 36 comprend une surface de butée 42, de normale sensiblement parallèle à la direction longitudinale du véhicule et est déformable de sorte que la surface de butée 42 est déplaçable selon une direction sensiblement parallèle à la direction longitudinale du véhicule.

Une languette 38 d'un deuxième type, visible sur la figure 2, est agencée pour venir en butée contre une face latérale du bloc optique 14 orientée selon une direction sensiblement perpendiculaire à la direction longitudinale du véhicule lorsque le bloc optique 14 est monté sur le véhicule. Ce deuxième type de languette 38 est destiné à régler le centrage du bloc optique 14 dans l'orifice 28 de l'aile 12. Les languettes 38 sont au nombre de trois.

Chaque languette 38 comprend une surface de butée 44, de normale sensiblement perpendiculaire à la direction longitudinale du véhicule, et est déformable de sorte que la surface de butée 44 est déplaçable selon une direction sensiblement perpendiculaire à la direction longitudinale du véhicule.

Le bord tombé 30 est fixé au support d'optique 16, sur la première bande de matière 32, au niveau des ajours de la bande de matière 34, à l'aide d'agrafes, par soudure ou bouterollage. Ainsi, le bord tombé 30 de l'aile possède une bonne inertie et est apte à supporter les efforts engendrés par le bloc optique 14 sur l'aile 12 et à supporter le poids du bloc optique 14. Cette fixation n'entrave pas la flexibilité des languettes.

L'ensemble 10 comprend également un cache 46 coiffant le bord de l'orifice 28, les languettes élastiques 36, 38, 40 et le bord du vitrage d'optique 24 et destiné à améliorer l'esthétique du véhicule. Le cache 46 est fixé à l'aide des languettes élastiques 40 conformées dans le bord tombé, permettant le clippage (également désigné encliquetage) du cache à leur extrémité 48. Ce cache protège en outre la périphérie du vitrage 24 des U.V. et permet ainsi d'éviter toute dégradation du vitrage due à des sollicitations mécaniques usant le revêtement de protection.

A l'aide de l'ensemble décrit ci-dessus, il est possible de positionner le bloc optique 14 précisément dans l'orifice 28 de l'aile en optimisant les jeux et affleurements relativement à l'aile 12.

Le procédé de positionnement du bloc optique 14 s'effectue comme suit.

Tout d'abord, on fixe l'aile 12 sur le support d'optique 16 et on clippe (ou encliquète) le cache 46 sur les languettes 40 prévues à cet effet. Ensuite, on positionne le bloc optique 14 sur le support d'aile 16 à l'aide de presseurs de telle manière que le bloc optique soit approximativement centré dans l'orifice 28. On serre ensuite les vis de fixation 18 pour solidariser le bloc optique 14 et le support d'aile 16.

Une fois le serrage commencé, le bloc optique 14 vient en contact avec l'aile 12, notamment avec les languettes 36, 38, et, en fonction des imperfections du bloc optique 14, il contraint plus ou moins les languettes élastiques 36, 38.

Chacune des languettes élastiques 36, 38 exerce une force de rappel élastique élémentaire sur le bloc optique 14 positionné en regard de l'orifice. Les languettes 38 permettent d'affiner par ce biais le centrage.

La répartition et le nombre des languettes 36 sont en outre telles que la somme des forces de rappel élastique élémentaires exercées par ces languettes 36 sur le bloc optique soit sensiblement constante, c'est-à-dire, dans le mode de réalisation décrit, inférieure à 20% de la somme des forces de réaction.

Ainsi, un opérateur effectuant le montage du bloc avant serre les vis de fixation 18 jusqu'à obtenir un couple de serrage prédéterminé, cette opération étant suffisante pour effectuer un prépositionnement relativement précis du bloc optique en même temps que la fixation de celui-ci sur le support d'optique.

Ensuite, pour effectuer le positionnement définitif du bloc optique 14 relativement à l'aile 12, l'opérateur place un gabarit sur l'orifice 28 et serre ou déserre légèrement chacune des vis 18 de façon à obtenir un positionnement optimal. La position stable du bloc optique à tout instant du réglage rend cette étape particulièrement aisée et rapide.

Ainsi, l'ensemble permet d'obtenir des jeux et affleurements optimaux entre l'aile et le bloc optique du véhicule tout en simplifiant le montage du bloc avant.

On notera que le mode de réalisation décrit ci-dessus n'est en aucun cas limitatif de l'invention. En variante, les moyens de clippage (ou d'encliquetage) du cache sont ménagés sur les languettes élastiques formant butées 36 ou 38.

En outre, l'aile peut ne pas comprendre de bord tombé ou peut comprendre un nombre plus limité de languettes 36 (par exemple, trois) et/ou un plus grand nombre de languettes 38.

Les moyens élastiques formant butée ne sont également pas limités à une pluralité de languettes élastiques. Ils peuvent, par exemple, être formés par un seul élément périphérique suffisamment flexible pour comprendre une pluralités de points déformables indépendamment les uns des autres.

De plus, les moyens de déplacement du bloc optique peuvent être indépendants des moyens de fixation de celui-ci.

Les matériaux dans lesquels les différents éléments peuvent être réalisés ne sont en outre pas limités aux matériaux décrits ci-dessus.

## Revendications

1. Aile (12) de véhicule automobile en matière plastique **caractérisée en ce qu'**elle comprend un orifice (28) en regard duquel un bloc optique (14) est destiné à être placé, et, à la périphérie de cet orifice (28), des moyens élastiques formant butée (36, 38) contre lesquels le bloc optique (14) est destiné à s'appuyer, lesdits moyens élastiques (36, 38) étant agencés de sorte que le bloc optique (14) est apte à être placé dans différentes positions en regard de l'orifice (28) en prenant appui contre les moyens élastiques (36, 38).

2. Aile (12) selon la revendication précédente, dans laquelle les moyens élastiques formant butées comprennent une pluralité d'éléments (36, 38) élastiquement déformables indépendamment les uns des autres, chaque élément (36) exerçant une force de rappel élastique élémentaire sur le bloc optique (14) positionné en regard de l'orifice (28) , lesdits éléments (36) étant répartis à la périphérie de l'orifice (28) et présents en un nombre suffisant pour que la somme des forces de rappel élastique élémentaires exercées sur le bloc optique (14) soit sensiblement constante.

3. Aile (12) selon l'une quelconque des revendications précédentes, dans laquelle les moyens élastiques comportent au moins une languette élastique (36, 38) solidaire de l'aile (12).

4. Aile (12) selon l'une quelconque des revendications précédentes, comprenant, en périphérie de l'orifice (28), des moyens de fixation (40) d'un cache (46) coiffant le bord de l'orifice (28) et les moyens élastiques (36, 38).

5. Aile (12) selon la revendication précédente, dans laquelle les moyens de fixation du cache (46) comprennent des moyens de clippage élastique (40) du cache.

6. Aile (12) selon la revendication précédente, dans laquelle les moyens de fixation du cache sont formés dans au moins une languette élastique (40) solidaire de l'aile '12), éventuellement issue de moulage avec l'aile (12).

7. Aile (12) selon l'une quelconque des revendications précédentes, comprenant, en périphérie de l'orifice (28), un bord tombé (30).

8. Aile (12) selon la revendication précédente, dans laquelle la languette élastique (36, 38, 40) est conformée dans le bord tombé (30).

9. Aile (12) selon la revendication précédente, dans laquelle le bord tombé (30) comprend une première bande de matière (32) d'un seul tenant et une deuxième bande de matière (34) ajourée pour former la languette (36, 38, 40).

10. Aile (12) selon l'une quelconque des revendications précédentes, dans laquelle les moyens élastiques (36) sont agencés à la périphérie de l'orifice (28) pour venir en butée contre une face du bloc optique (14) destinée à être orientée selon une direction sensiblement parallèle à la direction longitudinale du véhicule lorsque le bloc optique est monté sur le véhicule.

11. Aile (12) selon l'une quelconque des revendications précédentes, dans laquelle les moyens élastiques (38) sont agencés à la périphérie de l'orifice (28) pour venir en butée contre une face du bloc optique destinée à être orientée selon une direction sensiblement perpendiculaire à la direction longitudinale du véhicule lorsque le bloc optique est monté sur le véhicule.

12. Ensemble d'un support d'optique (16) et d'une aile (12) selon l'une quelconque des revendications précédentes, **caractérisé en ce que** le support d'optique (16) comprend des moyens de déplacement (18) destinés à coopérer avec le bloc optique (14) et aptes à déplacer le bloc optique (14) dans différentes positions d'appui contre les moyens élastiques formant butées (36, 38).

13. Ensemble selon la revendication précédente, dans lequel les moyens de déplacement comprennent des moyens de fixation (18) du bloc optique (14) sur le support d'optique (16).

## Claims

1. A motor vehicle fender (12) made of plastics material, the fender being **characterized in that** it includes an orifice (28) in register with which a light unit (14) is to be placed, and at the periphery of said orifice (28), resilient abutment-forming means (36, 38) against which the light unit (14) is to bear, said resilient means (36, 38) being arranged so that the light unit (14) is suitable for being placed in different positions in register with the orifice (28) by bearing against the resilient means (36, 38).

2. A fender (12) according to the preceding claim, wherein the abutment-forming resilient means comprise a plurality of elements (36, 38) that are elastically deformable independently of one another, each element (36) exerting an individual resilient return force on the light unit (14) placed in register with the orifice (28), said elements (36) being distributed at the periphery of the orifice (28) and being present in sufficient number for the sum of the individual resilient return forces exerted on the light unit (14) to be substantially constant.

3. A fender (12) according to either preceding claim, wherein the resilient means include at least one resilient tongue (36, 38) secured to the fender (12).

4. A fender (12) according to any preceding claim, including fastener means (40) at the periphery of the orifice (28), the fastener means (40) serving to fasten a piece of trim (46) covering the edge of the orifice (28) and the resilient means (36, 38).

5. A fender (12) according to the preceding claim, wherein the fastener means for the trim (46) comprise means (40) for resilient clip-fastening of the trim.

6. A fender (12) according to the preceding claim, wherein the trim fastener means are formed in at least one resilient tongue (40) secured to the fender (12), possibly integrally molded with the fender (12).

7. A fender (12) according to any preceding claim, including a drop edge (30) at the periphery of the orifice (28).

8. A fender (12) according to the preceding claim, wherein the resilient tongue (36, 38, 40) is shaped in the drop edge (30).

9. A fender (12) according to the preceding claim, wherein the drop edge (30) comprises a first strip of material (32) in a single piece, and a second strip of material (34) that is pierced to form the tongue (36, 38, 40).

10. A fender (12) according to any preceding claim, wherein the resilient means (36) are arranged at the periphery of the orifice (28) to come into abutment against a face of the light unit (14) that is designed to face in a direction substantially parallel to the longitudinal direction of the vehicle when the light unit is mounted on the vehicle.

11. A fender (12) according to any preceding claim, wherein the resilient means (38) are arranged at the periphery of the orifice (28) to come into abutment against a face of the light unit that is designed to face in a direction substantially perpendicular to the longitudinal direction of the vehicle when the light unit is mounted on a vehicle.

12. An assembly comprising a light unit support (16) and a fender (12) according to any preceding claim, the assembly being **characterized in that** the light unit support (16) includes movement means (18) for cooperating with the light unit (14) and suitable for moving the light unit (14) into different positions bearing against the abutment-forming resilient means (36, 38).

13. An assembly according to the preceding claim, wherein the movement means include fastener means (18) for fastening the light unit (14) on the light unit support (16).

## Patentansprüche

1. Kotflügel (12) aus Kunststoff eines Kraftfahrzeugs, **dadurch gekennzeichnet, dass** er eine Öffnung (28) umfasst, die als Bezug für das Einsetzen eines Beleuchtungsmoduls (14) dient, sowie auf dem Umfang dieser Öffnung (28) elastische Mittel umfasst, die Anschläge (36, 38) bilden, auf denen das Beleuchtungsmodul (14) aufliegen soll, wobei die elastischen Mittel (36, 38) dergestalt angeordnet sind, dass das Beleuchtungsmodul (14) in Bezug auf die Öffnung (28) in unterschiedliche Positionen gebracht werden kann, wenn es auf die elastischen Mittel (36, 38) angedrückt wird.

2. Kotflügel (12) nach dem vorhergehenden Anspruch, bei dem die elastischen Mittel, welche als Anschläge dienen, eine Vielzahl von Elementen (36, 38) umfassen, die unabhängig voneinander elastisch verformbar sind, wobei jedes Element (36) eine elementare elastische Rückstellkraft auf das in Bezug auf die Öffnung (28) positionierte Beleuchtungsmodul ausübt, wobei die Elemente (36) auf dem Umfang der Öffnung (28) verteilt und in einer Anzahl vorhanden sind, die ausreicht, dass die Summe der elementaren elastischen Rückstellkräfte, die auf das Beleuchtungsmodul (14) ausgeübt werden, im Wesentlichen konstant bleibt.

3. Kotflügel (12) nach einem der vorhergehenden Ansprüche, bei dem die elastischen Mittel mindestens eine mit dem Kotflügel (12) festverbundene elastische Zunge (36, 38) aufweisen.

4. Kotflügel (12) nach einem der vorhergehenden Ansprüche, der auf dem Umfang der Öffnung (28) Befestigungsmittel (40) einer Abdeckung (46) umfasst, die den Rand der Öffnung (28) und die elastischen Mittel (36, 38) bedeckt.

5. Kotflügel (12) nach dem vorhergehenden Anspruch, bei dem die Befestigungsmittel der Abdeckung (46) Mittel zum elastischen Einrasten (40) der Abdeckung umfassen.

6. Kotflügel (12) nach dem vorhergehenden Anspruch, bei dem die Befestigungsmittel der Abdeckung in mindestens einer elastischen, mit dem Kotflügel (12) festverbundenen Zunge gebildet werden, welche gegebenenfalls bereits bei der Abformung des Kotflügels (12) mit ausgebildet werden können.

7. Kotflügel (12) nach einem der vorhergehenden Ansprüche, der auf dem Umfang der Öffnung (28) einen gebördelten Rand (30) umfasst.

8. Kotflügel (12) nach dem vorhergehenden Anspruch, bei dem die elastische Zunge (36, 38, 40) in den gebördelten Rand (30) eingepasst ist.

9. Kotflügel (12) nach dem vorhergehenden Anspruch, bei dem der gebördelte Rand (30) einen ersten Streifen (32) aus durchgehendem Material und einen zweiten Streifen (34) aus einem Material umfasst, das zur Bildung der Zunge (36, 38, 40) durchbrochen ist.

10. Kotflügel (12) nach einem der vorhergehenden Ansprüche, bei dem die elastischen Mittel (36) auf dem Umfang der Öffnung (28) so angeordnet sind, dass sie an einer Fläche des Beleuchtungsmoduls (14) anstoßen, die in einer zur Längsrichtung des Fahrzeugs im Wesentlichen parallelen Richtung ausgerichtet werden soll, wenn das Beleuchtungsmodul am Fahrzeug montiert wird.

11. Kotflügel (12) nach einem der vorhergehenden Ansprüche, bei dem die elastischen Mittel (38) auf dem Umfang der Öffnung (28) so angebracht sind, dass sie an einer Fläche des Beleuchtungsmoduls (14) anstoßen, die in einer zur Längsrichtung des Fahrzeugs im Wesentlichen senkrechten Richtung ausgerichtet werden soll, wenn das Beleuchtungsmodul am Fahrzeug montiert wird.

12. Anordnung einer Beleuchtungsmodul-Halterung (16) und eines Kotflügels (12) nach einem der vorhergehenden Ansprüche, **dadurch gekennzeichnet, dass** die Beleuchtungsmodul-Halterung (16) Mittel zum Bewegen (18) umfasst, die für ein Zusammenwirken mit dem Beleuchtungsmodul (14) vorgesehen und in der Lage sind, das Beleuchtungsmodul (14) in unterschiedliche Auflagepositionen auf den elastischen Mittel (36, 38), welche als Anschläge dienen, zu bewegen.

13. Anordnung nach dem vorhergehenden Anspruch, bei dem die Mittel zum Bewegen Befestigungsmittel (18) des Beleuchtungsmoduls (14) auf der Beleuchtungsmodul-Halterung (16) umfassen.
